# EUROPEAN PATENT APPLICATION

(11) **EP 1 683 722 A1**
(43) Date of publication of application: **26.07.2006**
(21) Application number: 04773011.4
(22) Date of filing: 13.09.2004
(51) Int. Cl.: B65B 9/08

(54) **PACKAGING-FILLING MACHINE**

(30) Priority: 12.11.2003 JP 2003382027
(71) Applicant: Tetra Laval Holdings & Finance S.A., 1009 Pully (CH)
(72) Inventor: MAEMURA, Shunichi, Tokyo 102-8544 (JP); OTSUKA, Yuzo, Tokyo 102-8544 (JP)
(74) Representative: Müller, Frank Peter
(86) International application number: PCT/JP2004/013329
(87) International publication number: WO 2005/047110

(57) **Abstract**

A packaging and filling system is provided, which decreases the waste amount of the reel, reduces the environmental load, and produces various kinds of containers in small quantities. The packaging and filling machine which obtains a food filled container by means of the process of forming the container and filling the food using the web-shaped laminated packaging material comprises a packaging material reel 2 wound in a roll shape with a first packaging material 1, a film reel 4 wound in a roll shape with a second packaging material 3, and lamination means 6 to obtain a laminated packaging material 5 by laminating the second packaging material 3 to the first packaging material 1.

## Description

### Technical Field

The present invention relates to a packaging and filling machine to produce a packaging container for beverages such as cow's milk, juice and mineral water, and fluid food and the like.

### Background Art

A web-shaped laminated packaging material is used for packaging liquid foods and the like. The packaging container for beverages such as cow's milk, juice and mineral water, and fluid food and like is obtained, for example, from the web-shaped packaging material made of fibrous substrate (for example such as paper)/plastic lamination with pleat lines, printed with an appearance design. The web-shaped laminated packaging material is formed into a tube shape by longitudinal sealing in the longitudinal direction, the food is filled in the tube-shaped packaging material, and the tube-shaped packaging material is laterally sealed in the transverse direction, formed into a primary shape with a pillow form, cut at an individual container, folded along pleat lines, then formed into a final shape by folded along pleat lines. As the final shape, there includes shapes such as a brick, an octagonal column and tetrahedron.

In a roof-shaped paper packaging container, the paper packaging material printed with the product appearance design on the surface is cut into a predetermined shape, blanks sealed in the longitudinal direction of the container are obtained, after the bottom of the blanks is sealed in a filling machine, beverages such as cow's milk and juice are filled from a top opening, the upper part is sealed, and thus the product container is obtained.

In another packaging and filling machine, the laminated packaging material with pleat lines is cut into a predetermined shape, blanks sealed vertically in the longitudinal direction of the container are obtained, the lid portion of the blanks is formed by injection molding, foods are filled from the opening at the bottom portion of the blanks, and the bottom portion is sealed.

The laminated packaging material with pleat lines printed with the product appearance design is produced wound in a reel shape, in a manufacturing plant of the packaging material, by laminating a process for laminating fibrous layer of web-shaped paper and the like, aluminum foil, and plastic film by means of extrusion laminating and the like, by a printing process, prior to, in the middle of, or after the laminating process, for printing with the appearance design and by a crease process for providing pleat lines with the packaging material.
The reel shape laminated packaging material is transferred from the manufacturing plant of the packaging material to a food factory, with which the packaging and filling machine is equipped. In the packaging and filling machine, laminated packaging materials are connected with each other between the prior and subsequent reels, in addition, a protecting tape for the end surface as an auxiliary packaging material is heat sealed.
[Patent document 1] Japanese Patent Laid-Open No. 2003-118708
[Patent document 2] Japanese Patent Laid-Open No. 2002-307575

### Disclosure of the Invention

The reel shape laminated packaging material is equivalent to several tens of thousands of or a hundred and several tens of thousands of containers. When various kinds of containers are produced in small quantity, a large number of used reels are left, causing the problem of the increase of waste materials and the growth of an environmental load.
Producing the reel shape laminated packaging material in the manufacturing plant of the packaging material at high speed and effectively allows the cheaper production. A packaging and filling system for producing various kinds of containers in small quantities using the cheap reel shape laminated packaging material is necessary.
It is an object of the present invention to provide the packaging and filling system which uses the reel shape laminated packaging material effectively, reduces the waste amount of the used reel, and can reduce the environmental load.
It is a further object of the present invention to provide the packaging and filling system which produces various kinds of containers in small quantities using the cheap reel shape laminated packaging material.

### [Means for solving the problem]

A packaging and filling machine according to the present invention is the packaging and filling machine to obtain a food filled container by means of the process of forming the container and filling the food using a web-shaped laminated packaging material, characterized by comprising a packaging material reel wound in a roll shape with a first packaging material laminated at least a support layer and a sealable innermost layer, a film reel wound in a roll shape with a second packaging material comprising an outermost film and a container design layer printed on the surface of the outside or inside of said outermost layer, and lamination means to obtain said laminated packaging material by laminating said second packaging material unreeled from said film reel to the outside of said support layer of said first packaging material unreeled from said packaging material reel.

In the packaging and filling machine of the preferable embodiment according to the present invention, said laminated packaging material with pleat lines is formed into a tube shape, sealed vertically along the longitudinal direction, and foods are filled in said tube-shaped packaging material, said tube-shaped packaging material is sealed laterally in the transverse direction, cut at said transverse sealing zone, and a final shape container is formed by folding along said pleat lines.

In the packaging and filling machine of the preferred embodiment according to the present invention, said laminated packaging material with pleat lines is cut into a predetermined shape, and container blanks sealed vertically in the longitudinal direction of the container are obtained, sealed at the bottom of said blanks, filled with foods from the opening of said top portion, sealed said top portion.

In the packaging and filling machine of the preferred embodiment according to the present invention, said laminated packaging material with pleat lines is cut into a predetermined shape, container blanks sealed vertically in the longitudinal direction of the container are obtained, the lid portion of said blanks is formed by injection molding, foods are filled from the opening at the bottom portion of said blanks, and said bottom portion is sealed.

In the packaging and filling machine of the preferred embodiment according to the present invention, said lamination means comprises at least two pressing rollers which press said first packaging material unreeled from said packaging material reel and said second packaging material unreeled from said film reel each other.

In the packaging and filling machine of the preferable embodiment according to the present invention, said pressing roller which presses said second packaging material is a heat roller.

In the packaging and filling machine of the preferable embodiment according to the present invention, the laminate surface of said first packaging material unreeled from said packaging material reel and/or the laminate surface of said second packaging material unreeled from said film reel are subjected to surface activation treatments such as corona discharge and flame treatment.

In the packaging and filling machine of the preferred embodiment according to the present invention, said lamination means laminates said first packaging material unreeled from said packaging material reel and said second packaging material unreeled from said film reel by means of extrusion lamination.

In the packaging and filling machine of the preferred embodiment according to the present invention, said first packaging material wound in a roll shape around said packaging material reel is the packaging material with pleat lines.

In the packaging and filling machine of the preferred embodiment according to the present invention, said first packaging material wound in a roll shape around said packaging material reel is the packaging material without pleat lines, and said packaging and filling machine comprises crease means to provide said laminate packaging material obtained by said lamination means with pleat lines.

In the packaging and filling machine of the preferred embodiment according to the present invention, the width of the second packaging material is wider than that of the first packaging material and the surplus portion of the second packaging material covers the surface of one or both ends of the first packaging material.

### [Effect of the Invention]

The packaging and filling machine according to the present invention effectively uses the reel shape laminated packaging material, decreases the waste amount of the used reel, and can reduce the environmental load.

The packaging and filling machine according to the present invention can produce various kinds of containers in small quantities using the cheap reel shape laminated packaging material.

### Brief Description of the Drawings

[0034]
FIG 1 is a partial schematic drawing illustrating three types of the packaging and filling machine of the embodiment according to the present invention.
FIG 2 is a schematic cross-sectional view illustrating the process to obtain the laminated packaging material in the packaging and filling machine of the embodiment according to the present invention.
FIG 3 is a schematic drawing illustrating one example of the packaging and filling machine of the embodiment according to the present invention.
FIG. 4 is a schematic drawing illustrating another example of the packaging and filling machine of the embodiment according to the present invention.
FIG 5 is a schematic drawing illustrating still another example of the packaging and filling machine of the embodiment according to the present invention.
FIG 6 is one perspective view of the container obtained by the packaging and filling machine of the embodiment according to the present invention.
FIG 7 is another perspective view of the container obtained by the packaging and filling machine of the embodiment according to the present invention.

### Best Modes for Carrying Out the Invention

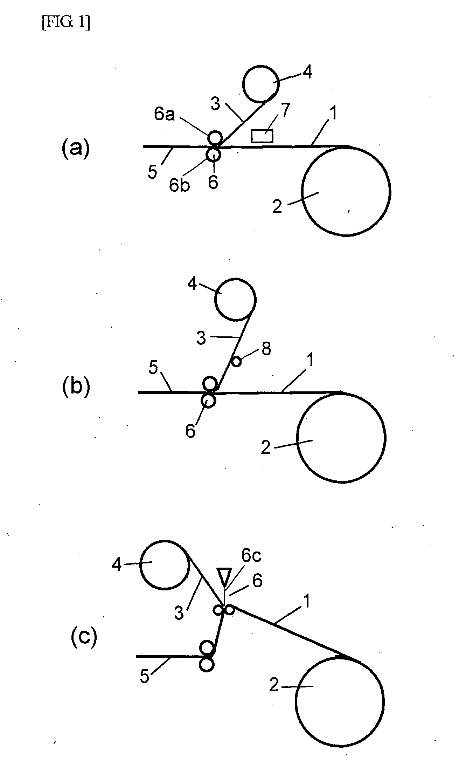

An exemplary embodiment of the present invention will be described below with referring to drawings. FIG 1 is a partial schematic drawing illustrating a lamination means 6 in three types of embodiments ((a), (b) and (c)) of the packaging and filling machine according to the present invention. The lamination means comprises a packaging material reel 2 wound in a roll shape with a first packaging material 1 laminated at least a support layer with a sealable innermost layer, a film reel 4 wound in a roll shape with a second packaging material 3 comprising an outermost film and a container design layer printed on the surface of the outside or inside of said outermost layer, and obtains said laminated packaging material 5 by laminating said second packaging material 3 unreeled from said film reel 4 to the outside of said support layer of said first packaging material 1 unreeled from said packaging material reel 2.

In the exemplary embodiment of the packaging and filling machine shown in FIG 1 (a), lamination means 6 comprises at least two pressing rollers 6a, 6b which press the first packaging materiallunreeled from the packaging material reel 2 and the second packaging material 3 unreeled from the film reel 4 with each other and the pressing roller 6a which presses the second packaging material is a heat roller. The exemplary embodiment of the packaging and filling machine comprises treatment means 7 subjecting the laminate surface of the first packaging material 1 unreeled from packaging material reel 2 to surface activation treatments such as corona discharge and flame treatment.

In an exemplary embodiment of the packaging and filling machine illustrated in FIG1(b), lamination means 6 comprises at lease tow pressing rollers 6a, 6b pressing the first packaging material 1 unreeled from the packaging material reel 2 and the second packaging material 3 unreeled from the film reel 4 with each other, and provides an anchor coat applying roller 8 for dry lamination along the laminate surface of the second packaging material unreeled from the film reel.
In the exemplary embodiment of the packaging and filling machine, an anchor coating agent is applied to the laminate surface of the second packaging material by an anchor coat applying roller 8, which is dry laminated by the pressing roller 6.

In an exemplary embodiment of the packaging and filling machine illustrated in FIG.1(c), lamination means 6 laminates the first packaging material ,1 unreeled from the packaging material reel 2 and the second packaging material 3 unreeled from the film reel 4 by means of extrusion lamination using a molten lamination plastic 6 c.

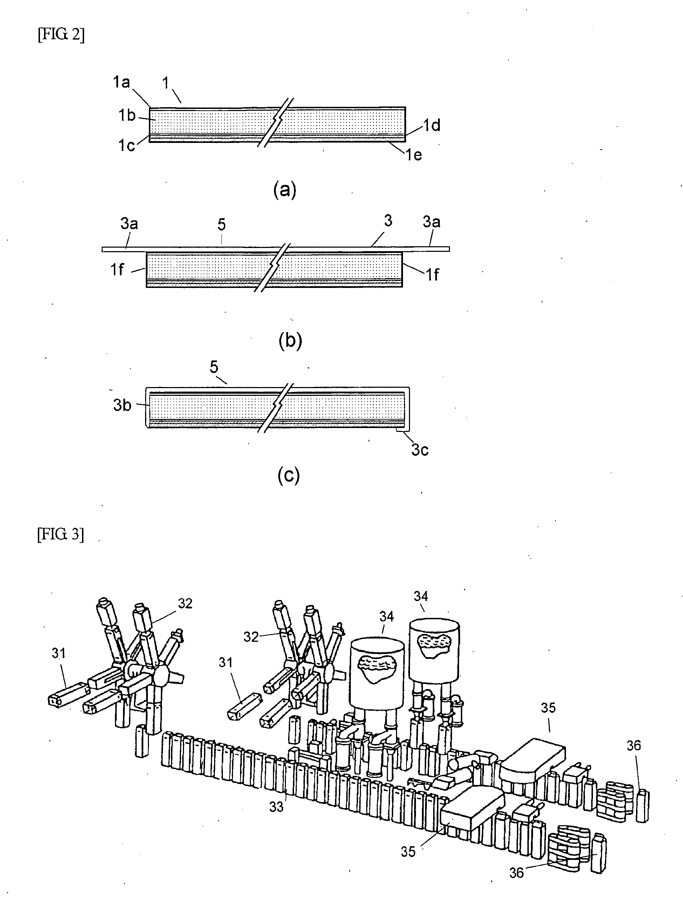

FIG 2 is a schematic cross-sectional view illustrating a process to obtain the laminated a packaging material 5 by laminating the first packaging material 1 and the second packaging material 3. FIG 2(a) is a cross-sectional view of the first packaging material 1, and the first packaging material 1 comprises a plastic thin layer 1a, a paper quality supporting layer 1b, an adhesive plastic layer 1c, a barrier layer ( for example aluminum foil, inorganic oxide layer and the like) 1d and an innermost sealable plastic layer 1e.

FIG 2(b) is a cross-sectional view of the laminated the packaging material 5. In the embodiment, the width of the second packaging material 3 is wider than that of the first packaging material 1 and surplus portions 3a, 3a of the second packaging material protrude from the end surfaces 1f of both ends of the first packaging material 1.
The second packaging material 3 comprises a container design layer printed on an outermost film and the surface of the outer or inner side of said outermost film. In the invention, the container design layer is printed on the surface of the outer or inner side of the outermost film.

FIG 2(c) is a cross-sectional view of the final laminated the packaging material 5. In this embodiment, as described above, the width of the second packaging material 3 is wider than that of the first packaging material 1 and surplus portions 3b, 3c of the second packaging material cover the end surface 1f of both ends of the first packaging material 1.
This coating protects the end surface from moisture, ambient air and oxygen gas and like. The strip tape, which was conventionally necessary, for protecting the end surface becomes unnecessary by means of this coating.

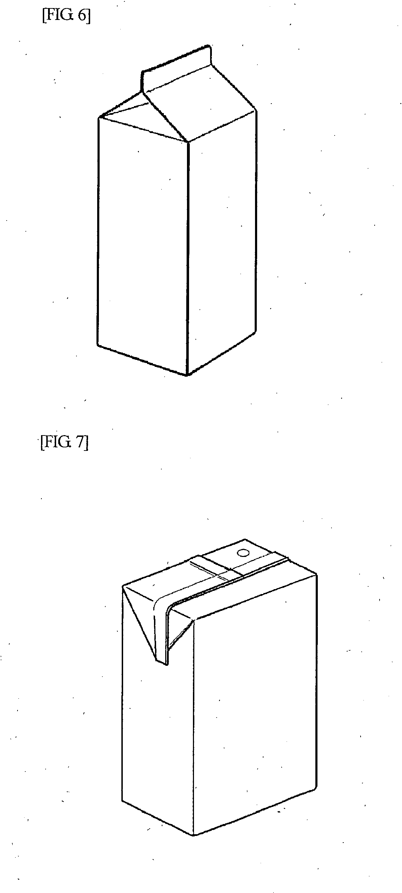

In the packaging and filling machine of the preferred embodiment according to the present invention, after the lamination process illustrated in FIG 1, as illustrated in FIG. 3, the laminated packaging material 5 with pleat lines is cut into a predetermined shape, container blanks 31 sealed vertically in the longitudinal direction of the container are obtained, the bottom of the blanks is sealed by means of bottom sealing means 32, foods are filled from the opening at the top portion of a container 33 by means of filling means 34, the top portion of the container 33 is sealed by means of top sealing means 35, and packaging containers 36 is obtained as illustrated in FIG 6.

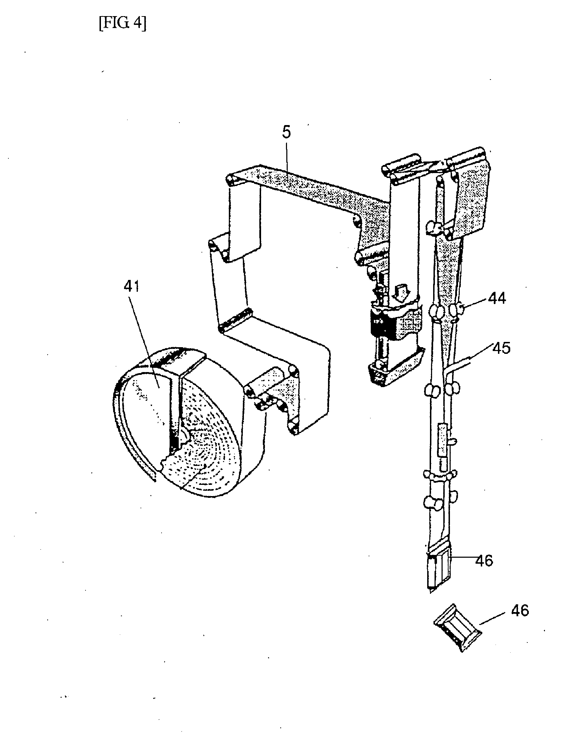

The packaging and filling machine of the preferred embodiment according to the present invention, as illustrated in FIG 4, comprises lamination means (not shown) which laminates the first packaging material from a packaging material reel 41 and the second packaging material from a film reel (not shown), the laminated packaging material 5 with pleat lines is formed into a tube shape by a forming roller 44, sealed vertically along the longitudinal direction, foods are filled in the tube-shaped packaging material through a filling pipe 45, the tube-shaped packaging material is sealed laterally in the transverse direction, cut at the area of the transverse sealing, a container 46 is obtained, and the final shape container is formed as illustrated in FIG 7 by means of folding along pleat lines.

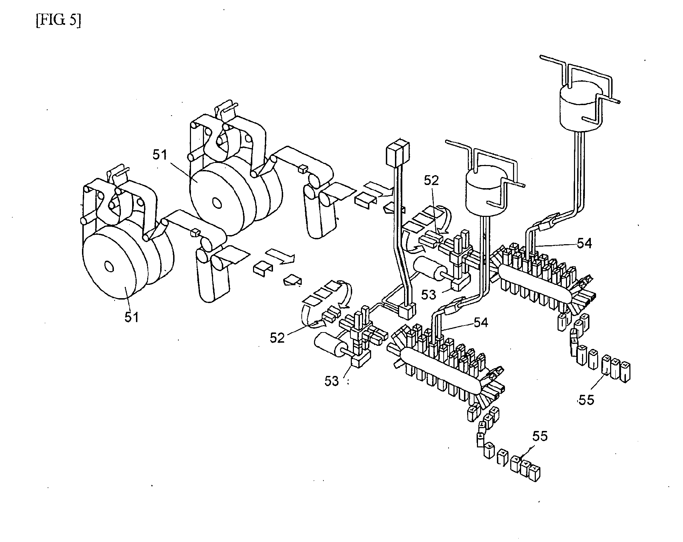

The packaging and filling machine of the preferable embodiment according to the present invention, as illustrated in FIG 5, comprises lamination means (not shown) which laminates the first packaging material from a packaging material reel 51 and the second packaging material from a film reel (not shown), the laminated packaging material 5 with pleat lines is cut into a predetermined shape, container blanks 52 sealed vertically in the longitudinal direction is obtained, the lid portion of the balks is formed by injection molding 53, foods are filled from the opening at the bottom portion of the blanks by means of filling means 54, the bottom portion is sealed, and a final container 55 is obtained.

In one embodiment of the packaging and filling machine according to the present invention, the first packaging material wóund in a roll shape around the packaging material reel is the packaging material with pleat lines. In the embodiment, the first packaging material is provided with pleat lines in the manufacturing plant of the packaging material.

In another embodiment of the packaging and filling machine according to the present invention, the first packaging material wound in a roll shape around the packaging material reel is the packaging material without pleat lines, and the packaging and filling machine comprises crease means providing the laminated packaging material obtained by lamination means with pleat lines. In this embodiment, the first packaging material needs not to be provided with pleat lines in the manufacturing plant of the packaging material. In addition, it is not necessary to align at the lamination process to laminate the first packaging material and the second packaging material (a container design layer), and it is only needed that pleat lines are congruent with container design layer the at the crease means.

In addition, it is to be understood that the invention is not limited to above described embodiment, and that various changes may be made based on the sprit of the invention, which are not excluded from the scope of the invention.

### Industrial applicability

The packaging and filling machine according to the present invention makes it possible to produce packaging containers for beverages such as cow's milk, juice, mineral water, and fluid food and the like.

## Claims

1. A packaging and filling machine to obtain a container filled with food using a web-shaped laminated packaging material by processes of forming into a container and filling foods comprising:
a packaging material reel wound in a roll shape with a first packaging material laminated at least a support layer and a sealable inner most layer;
a film reel wound in a roll shape with a second packaging material comprising a outermost film and a container design layer printed on a surface of the outside or inside of said outermost film; and
lamination means to obtain said lamination packaging material by laminating said second packaging material unreeled form said film reel to the outside said support layer of said first packaging material unreeled from said packaging material reel.

2. The packaging and filling machine according to claim 1, wherein said laminated packaging material with pleat lines is formed into a tube shape, sealed vertically in the longitudinal direction, foods are filled in said tube-shaped packaging material, said tube-shaped packaging material is sealed laterally in the transverse direction, cut at said transverse sealing zone, and a final shape container is formed by folding along said pleat lines.

3. The packaging and filling machine according to claim 1, wherein said laminated packaging material with pleat lines is cut into a predetermined shape, blanks sealed vertically in the longitudinal direction of the container are obtained, sealed at the bottom of said blanks, filled with foods from the opening of said top portion, sealed said top portion.

4. The packaging and filling machine according to claim 1, wherein said laminated packaging material with pleat lines is cut into a predetermined shape, blanks sealed vertically in the longitudinal direction of the container are obtained, the lid portion of said blanks is formed by injection molding, foods are filled from the opening at the bottom portion of said blanks, and said bottom portion is sealed.

5. The packaging and filling machine according to claim 1, wherein said lamination means comprises at least two pressing rollers which press said first packaging material unreeled from said packaging material reel and said second packaging material unreeled from said film reel with each other.

6. The packaging and filling machine according to claim 5, wherein said pressing roller which presses said second packaging material is a heat roller.

7. The packaging and filling machine according to claim 5, wherein a laminate surface of said first packaging material unreeled from said packaging material reel and/ or that of the laminate surface of said second packaging material unreeled from said film reel are subjected to surface activation treatments such as corona discharge and flame treatment.

8. The packaging and filling machine according to claim 1, wherein said lamination means laminates said first packaging material unreeled from said packaging material reel and said second packaging material unreeled from said film reel by means of extrusion lamination.

9. The packaging and filling machine according to claim 1, wherein said first packaging material wound in a roll shape around said packaging material reel is the packaging material with pleat lines.

10. The packaging and filling machine according to claim 1, wherein said first packaging material wound in a roll shape around said packaging material reel is the packaging material without pleat lines, and said packaging and filling machine comprises crease means to provide said laminate packaging material obtained by said lamination means with pleat lines.

11. The packaging and filling machine according to claim 1, wherein the width of said second packaging material is wider than that of said first packaging material and the surplus portion of said second packaging material covers the surface of one or both ends of said first packaging material.
